# EUROPÄISCHE PATENTSCHRIFT

(11) **EP 0 760 987 B1**
(45) Veröffentlichungstag und Bekanntmachung des Hinweises auf die Patenterteilung: **20.09.2000**
(21) Anmeldenummer: 96908073.8
(22) Anmeldetag: 19.03.1996
(51) Int. Cl.: G07D 7/00

(54) **VERFAHREN ZUR PRÜFUNG DER UNVERSEHRTHEIT VON GESPEICHERTEN DATEN AUF EINER VERARBEITUNGSANLAGE FÜR BLATTGUT, WIE Z.B. BANKNOTEN ODER WERTPAPIERE**
METHOD OF VERIFYING THE INTEGRITY OF DATA STORED ON A PROCESSING FACILITY USED FOR PROCESSING SHEET-LIKE ARTICLES SUCH AS BANK NOTES OR BILLS
PROCEDE POUR VERIFIER L'INTEGRITE DES DONNEES STOCKEES SUR UNE INSTALLATION DE TRAITEMENT D'ARTICLES SOUS FORME DE FEUILLES TELS QUE BILLETS DE BANQUE OU TITRES

(30) Priorität: 23.03.1995 DE 19510626
(43) Veröffentlichungstag der Anmeldung: 12.03.1997
(73) Patentinhaber: Giesecke & Devrient GmbH, 81677 München (DE)
(72) Erfinder: ALBERT, Bodo, D-81377 München (DE); BUNTSCHECK, Wilhelm, D-82515 Wolfratshausen (DE)
(74) Vertreter: Klunker . Schmitt-Nilson . Hirsch
(86) Internationale Anmeldenummer: EP9601178
(87) Internationale Veröffentlichungsnummer: WO9629683

(56) Entgegenhaltungen:
- EP-A- 0 278 740
- WO-A-94/02913
- DE-A- 3 347 607
- DE-C- 2 760 453
- US-A- 4 358 849
- A. BEUTELSPACHER ET AL.: "Chipkarten als Sicherheitswerkzeug", SPRINGER VERLAG, BERLIN HEIDELBERG NEW YORK 1991

## Beschreibung

Die Erfindung betrifft ein Verfahren zur Prüfung der Unversehrtheit von gespeicherten Daten auf einer Verarbeitungsanlage für Blattgut, wie z. B. Banknoten oder Wertpapiere.

Eine solche Verarbeitungsanlage ist im allgemeinen aus mehreren Komponenten aufgebaut. Jede dieser Komponenten erfüllt bestimmte Aufgaben bei der Bearbeitung des Blattguts. Die Verarbeitungsanlage weist als eine Komponente eine Steuereinrichtung auf, die den anderen Komponenten übergeordnet ist. Die Steuereinrichtung steuert die einzelnen Vorgänge der Verarbeitungsanlage. Die anderen Komponenten sind als Module ausgeführt, die die eigentliche Verarbeitung des Blattguts durchführen. Mögliche Verarbeitungsvorgänge einzelner Module sind z. B. Vereinzeln des Blattgutes aus einem Stapel, Prüfen des Blattgutes auf Zustand oder Echtheit, Transport des Blattgutes, Stapeln oder Vernichten des Blattgutes.

In den Komponenten der Verarbeitungsanlage können Speicher vorgesehen sein, in denen Daten gespeichert werden, die zum Betrieb der Verarbeitungsanlage notwendig sind. Die Daten können beispielsweise Steuerungsbefehle, Programme, Ergebnisdaten oder Referenzdaten sein. Die einzelnen Komponenten der Verarbeitungsanlage sind untereinander so verbunden, daß zwischen ihnen Daten übertragen werden können.

Die Verarbeitungsanlage kann in verschiedenen Betriebszuständen betrieben werden. Die Betriebszustände können beispielsweise vom Bediener durch die Eingabe bestimmter parameter festgelegt werden. Solche Parameter können die Anzahl der zu prüfenden Blätter, die Denomination bei Banknoten, die Art oder die Güte bestimmter Prüfkriterien oder ähnliche Angaben sein.

Aus der DE-PS 27 60 453 ist eine solche Verarbeitungsanlage bekannt. Zur Speicherung von Daten besitzen sowohl die Steuereinrichtung als auch einzelne Module jeweils einen eigenen Speicher, in dem Daten gespeichert sind, die zum Betrieb der Verarbeitungsanlage notwendig sind. Der Datenaustausch zwischen der Steuereinrichtung und den Modulen wird über einen Zentralspeicher durchgeführt, auf den sowohl die Module als auch die Steuereinrichtung zugreifen können. Zusätzlich sind die Module zum Datenaustausch noch direkt miteinander verbunden.

Die DE-OS 33 47 607 zeigt eine Verarbeitungsanlage, bei der zur optischen Prüfung des Blattguts mehrere gleichartige Module verwendet werden. Hier besitzen sowohl die Steuereinrichtung als auch die einzelnen Module einen eigenen Speicher zur Speicherung von Daten. Die einzelnen Module sind untereinander sowie mit der Steuereinrichtung über einen Datenbus verbunden. Zusätzlich ist an den Datenbus ein übergeordneter Speicher angeschlossen, auf den alle Komponenten der Verarbeitungsanlage zugreifen können.

Generell können bei Vorrichtungen der genannten Art unerwünschte Änderungen an den auf der Verarbeitungsanlage gespeicherten Daten stattfinden. Diese können entweder aufgrund von Störungen in der Verarbeitungsanlage, wie z. B. Datenübertragungsfehler oder Datenverlust, oder durch bewußte Manipulation der Daten in betrügerischer Absicht entstehen.

Bei den bekannten Vorrichtungen sind keine Maßnahmen vorgesehen, durch die unerwünschte Änderungen in den auf der Verarbeitungsanlage gespeicherten Daten festgestellt werden können.

Verfahren zur Prüfung der Unversehrtheit von Daten mittels symmetrischer Verschlüsselungs algorithmen sind im Zusammenhang mit Chipkarten in dem Fachbuch "Chipkarten als Sicherheitswerkzeug", A. Beutelspacher et al., Springer Verlag, 1991, bechrieben.

Ausgehend davon liegt der Erfindung die Aufgabe zugrunde, ein Verfahren vorzuschlagen, bei dem die auf einer Verarbeitungsanlage für Blattgut gespeicherten Daten auf ihre Unversehrtheit geprüft werden, um Änderungen an diesen Daten feststellen zu können.

Diese Aufgabe wird durch die Merkmale des Anspruchs gelöst.

Erfindungsgemäß werden zunächst auf einer Prüfeinrichtung unversehrte Daten gespeichert, die den zu prüfenden Daten einer Komponente der Verarbeitungsanlage im unversehrten Zustand entsprechen. Zur Überprüfung der Unversehrtheit der zu prüfenden Daten auf der Komponente wird für jede Prüfung ein Schlüssel in der Prüfeinrichtung erzeugt, der von denen vorheriger Prüfungen verschieden ist. Unter Verwendung dieses Schlüssels und mittels eines kryptografischen Algorithmus werden zwei Chiffrate erstellt. Das eine Chiffrat wird aus den zu prüfenden Daten von der Komponente der Verarbeitungsanlage erstellt, auf der die zu prüfenden Daten gespeichert sind. Das andere Chiffrat wird von der Prüfeinrichtung aus den unversehrten Daten erstellt. Danach werden die beiden Chiffrate miteinander verglichen. Entsprechen die Chiffrate einander, so entsprechen auch die zu prüfenden Daten den unversehrten Daten und weisen somit keinerlei unerwünschte Veränderungen auf.

Ein Vorteil dieses Verfahrens ist es, daß ein Chiffrat durch die Prüfeinrichtung und das andere durch die zu prüfende Komponente berechnet wird. Dadurch verteilt sich auch die zur Bildung der Chiffrate benötigte Rechenkapazität.

Ein weiterer Vorteil besteht darin, daß bei jeder Prüfung ein Schlüssel erzeugt wird, der von denen vorheriger Prüfungen verschieden ist. Dieser muß somit nicht geheimgehalten werden. Die Gefahr einer Ausspähung des Schlüssels ist nicht gegeben.

Optional können die Daten, aus denen die Chiffrate erstellt werden, bei jeder Prüfung durch Hinzufügen einer Zufallszahl dynamisiert werden. Die aus den dynamisierten Daten erstellten Chiffrate ändern sich dann auch, wenn dieselben Daten mehrmals geprüft werden. Hierdurch kann eine betrügerische Manipulation der Prüfung durch Einspielen von Chiffraten früherer Prüfungen verhindert werden.

Vorzugsweise wählt man bei der Erstellung der Chiffrate einen kryptografischen Algorithmus, der gleichzeitig zu einer Datenreduktion führt. Dadurch weisen die Chiffrate Datenmengen auf, die verglichen mit den Datenmengen der ursprünglichen Daten relativ gering sind. Aufgrund der geringen Datenmengen dieser Chiffrate können sie einfach und schnell ausgetauscht und verglichen werden.

In einer Weiterbildung der Erfindung können auch die gespeicherten Daten mehrerer Komponenten der Verarbeitungsanlage in einem Arbeitsgang geprüft werden. Hierzu wird auf der Prüfeinrichtung eine Tabelle gespeichert, in der, abhängig vom Betriebszustand der Verarbeitungsanlage, gespeichert ist, welche der Komponenten zu prüfen sind, in welchen Speicherbereichen die zu prüfenden Daten der jeweiligen Komponenten gespeichert sind und in welchen Speicherbereichen der Prüfeinrichtung die korrespondierenden und unversehrten Daten gespeichert sind. Mit Hilfe dieser Tabelle kann die Prüfeinrichtung die zur Überprüfung der einzelnen Komponenten notwendigen Chiffrate erstellen und mit denen von den jeweiligen Komponenten erzeugten Chiffrate vergleichen.

Weitere Merkmale der Erfindung ergeben sich aus den abhängigen Ansprüchen. Nachfolgend werden einige Ausführungsbeispiele der Erfindung anhand der Figuren beschrieben. Es zeigen:
- Fig. 1: Flußdiagramm einer ersten Ausführungsform der Erfindung,
- Fig. 2: Flußdiagramm zweier Ausführungsformen des kryptografischen Algorithmus,
- Fig. 3: Prinzipskizze der Verarbeitungsanlage,
- Fig. 4: erste Implementation der ersten Ausführungsform der Erfindung,
- Fig. 5: Prinzipskizze eines Systems aus Verarbeitungsanlage und Hilfseinrichtung,
- Fig. 6: zweite Implementation der ersten Ausführungsform der Erfindung,
- Fig. 7: Flußdiagramm einer zweiten Ausführungsform der Erfindung,
- Fig. 8: Prinzipskizze einer erweiterten Verarbeitungsanlage,
- Fig. 9: Implementation der zweiten Ausführungsform.

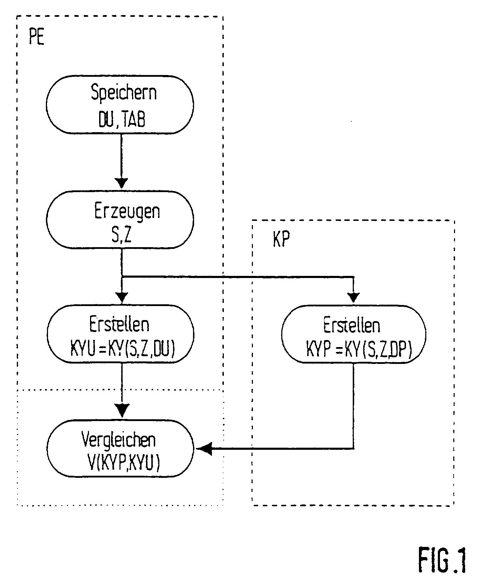

Fig. 1 zeigt ein Flußdiagramm einer ersten Ausführungsform der Erfindung. Zur Prüfung der Unversehrtheit von gespeicherten Daten auf einer Komponente KP einer Verarbeitungsanlage für Blattgut durch eine Prüfeinrichtung PE werden zunächst unversehrte Daten DU auf der Prüfeinrichtung PE gespeichert. Diese unversehrten Daten DU entsprechen den zu prüfenden Daten DP auf der Komponente KP der Verarbeitungsanlage in einem bestimmten Betriebszustand BZ der Verarbeitungsanlage im unversehrten Zustand.

Bei jeder Prüfung von gespeicherten Daten auf einer Komponente KP der Verarbeitungsanlage wird durch die Prüfeinrichtung PE ein Schlüssel S erzeugt, der bei jeder Prüfung der Unversehrtheit von Daten verschieden ist. Der Schlüssel S wird zur Erzeugung von Chiffraten mittels eines kryptografischen Algorithmus KY benutzt. Optional kann noch eine Zufallszahl Z von der Prüfeinrichtung PE erzeugt werden, die zur Dynamisierung der Daten DP bzw. DU benutzt wird.

Die zur Erstellung eines Chiffrats notwendigen Daten S bzw. Z werden dann von der Prüfeinrichtung PE zur zu prüfenden Komponente KP übertragen. Sowohl auf der Prüfeinrichtung PE als auch auf der zu prüfenden Komponente KP wird ein Chiffrat mittels eines kryptografischen Algorithmus KY und des Schlüssels S bzw. der Zufallszahl Z berechnet. Auf der Komponente KP der Verarbeitungsanlage wird ein Chiffrat KYP aus den zu prüfenden Daten DP erstellt. Ein Chiffrat KYU wird durch die Prüfeinrichtung PE aus den unversehrten Daten DU erstellt, wobei die unversehrten Daten DU den zu prüfender. Daten DP im unversehrten Zustand entsprechen.

Anschließend werden die Chiffrate KYU und KYP in einem Vergleich V verglichen. Hierzu wird das Chiffrat KYP von der zu prüfenden Komponente KP an die Prüfeinrichtung PE übertragen. Der Vergleich V kann beispielsweise direkt von der Prüfeinrichtung PE durchgeführt werden. Eine weitere Möglichkeit des Vergleichs V besteht darin, sowohl das Chiffrat KYU als auch das Chiffrat KYP in lesbarer Form auszugeben und den Vergleich V der Chiffrate von einem Bediener BD der Verarbeitungsanlage durchführen zu lassen.

Sollen mehrere Komponenten in der Verarbeitungsanlage oder eine Komponente zu unterschiedlichen Betriebszuständen BZ der Verarbeitungsanlage oder eine Kombination dieser beiden Möglichkeiten geprüft werden, so kann optional eine Tabelle TAB in der Prüfeinrichtung gespeichert werden. In dieser Tabelle TAB ist abhängig von möglichen Betriebszuständen BZ der Verarbeitungsanlage gespeichert, welche Komponenten zu prüfen sind, in welchen Speicherbereichen SP die zu prüfenden Daten DP der jeweiligen Komponente gespeichert sind und welche Speicherbereiche SU der Prüfeinrichtung PE die korrespondierenden und unversehrten Daten DU gespeichert sind. Zusätzlich werden in der Prüfeinrichtung PE alle unversehrten Daten DU gespeichert, die abhängig von den möglichen Betriebszuständen BZ der Verarbeitungsanlage in der Tabelle TAB auftreten.

Die Speicherbereiche SP bzw. SU können beispielsweise unter Verwendung direkter physikalischer Speicheradressen oder logischer Namen definiert werden. Die Verwendung direkter physikalischer Speicheradressen wird im allgemeinen bei Halbleiterspeichern verwendet, wie z. B. RAM, ROM, EPROM, EEPROM oder ähnlichem. Ein Speicherbereich kann hier beispielsweise durch die Angabe einer Startadresse und einer Endadresse im Speicher oder durch die Angabe einer Startadresse und der Länge des Speicherbereichs im Speicher festgelegt werden. Bei Massenspeichern, wie z. B. Festplattenlaufwerken, Diskettenlaufwerken, Streamer, CD-ROM-Laufwerke oder ähnlichem, werden im allgemeinen logische Namen (Dateinamen) zur Festlegung bestimmter Speicherbereiche verwendet.

Fig. 2a zeigt eine Ausführungsform des kryptografischen Algorithmus KY. Die zu verschlüsselnden Daten DU bzw. DP können hier vor Durchführung des eigentlichen kryptografischen Algorithmus KY durch Hinzufügen einer Zufallszahl Z dynamisiert werden. Diese Dynamisierung kann durchgeführt werden, um auch bei ansonsten gleichem kryptografischen Algorithmus KY unterschiedliche Kryptogramme KYU bzw. KYP zu erhalten. Durch diese Vorgehensweise kann verhindert werden, daß in Folge einer betrügerischen Manipulation der Verarbeitungsanlage Chiffrate alter Überprüfungen ausgespäht werden und diese dann zur Vortäuschung einer korrekten Überprüfung in die Verarbeitungsanlage eingespielt werden.

Die optional durch die Zufallszahl Z dynamisierten Daten DU bzw. DP werden dann mittels eines Komprimierungsverfahrens KV komprimiert. Die so erhaltenen komprimierten Daten KD werden dann mittels eines Verschlüsselungsverfahrens VV unter der Verwendung des Schlüssels S verschlüsselt. Ergebnis dieses Verschlüsselungsverfahrens VV ist dann das gewünschte Chiffrat KYU bzw. KYP.

Allgemein können zur Komprimierung und zur Verschlüsselung alle gängigen Verfahren benutzt werden. Bekannte Komprimierungsverfahren sind beispielsweise Hashfunktionen. Als Verschlüsselungsverfahren VV lassen sich beispielsweise der Data Encryption Standard (DES) oder Public-Key-Verfahren, wie der RSA-Algorithmus, verwenden.

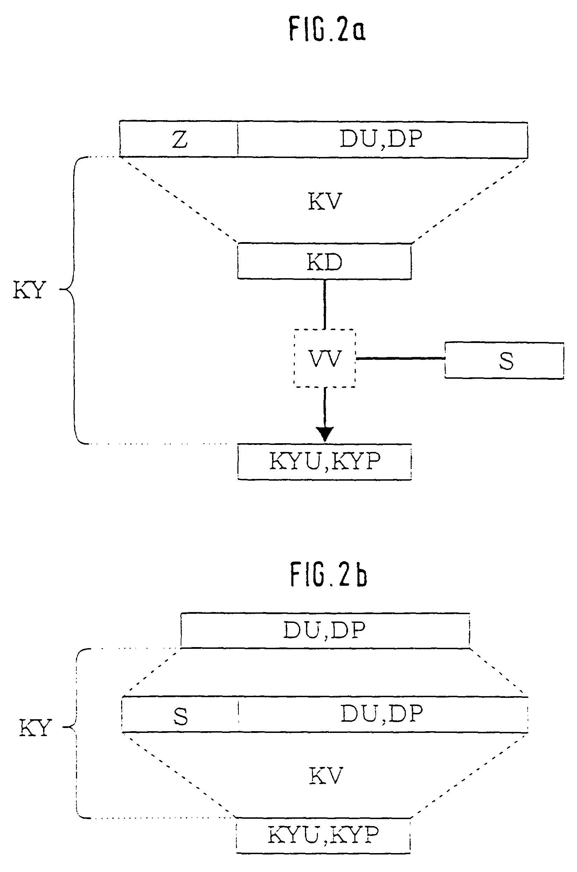

Die Fig. 2b zeigt eine weitere Ausführungsform des kryptografischen Algorithmus KY. Hier wird den zu verschlüsselnden Daten DU bzw. DP zunächst der Schlüssel S hinzugefügt und danach mittels eines Komprimierungsverfahrens KV direkt zum Chiffrat KYU bzw. KYP komprimiert. Generell sind auch andere Ausführungsformen des kryptografischen Algorithmus KY möglich.

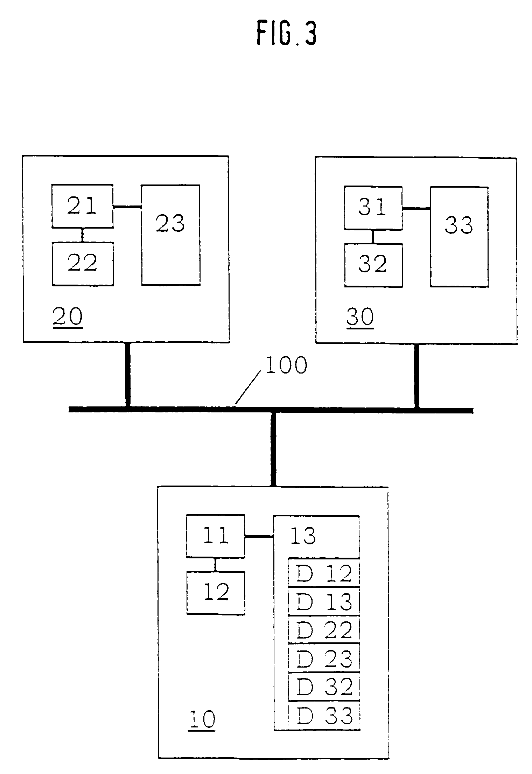

Fig. 3 zeigt eine Prinzipskizze einer Verarbeitungsanlage für Blattgut. Sie ist hier aus drei Komponenten 10, 20, 30 aufgebaut, wobei die einzelnen Komponenten über eine Datenleitung 100 verbunden sind. Die Steuereinrichtung 10 ist eine den anderen Komponenten übergeordnete Komponente und dient zur Steuerung der einzelnen Verarbeitungsvorgänge. Sie besitzt unter anderem einen Prozessor 11, der auf Halbleiterspeicher 12 und Massenspeicher 13 zugreifen kann.

Die Halbleiterspeicher 12 können beispielsweise aus flüchtigen RAM- oder nichtflüchtigen ROM, EPROM, EEPROM oder ähnlichen Speichern bestehen. Im allgemeinen wird der flüchtige RAM vom Prozessor 11 während der Ausführung eines Programms genutzt. Die nichtflüchtigen Speicher enthalten Daten, die zum Betrieb der Verarbeitungsanlage notwendig sind. Speicherbereiche dieser Halbleiterspeicher 12 werden im allgemeinen unter der Verwendung direkter physikalischer Speicheradressen festgelegt.

Die Massenspeicher 13 dienen zur Speicherung von größeren Datenmengen und können beispielsweise durch Festplattenlaufwerke, Diskettenlaufwerke, CD-ROM-Laufwerke oder ähnlichem realisiert werden. In den Massenspeichern 13 werden Daten gespeichert, die für den Betrieb der Verarbeitungsanlage notwendig sind. Speicherbereiche des Massenspeicher 13 werden im allgemeinen unter der Verwendung logischer Namen festgelegt.

Als weitere Komponenten der Verarbeitungsanlage sind hier zwei Module 20 und 30 gezeigt. Diese weisen zwar ein gleiches Blockschaltbild auf, führen aber innerhalb der Verarbeitungsanlage unterschiedliche Aufgaben bei der Bearbeitung des Blattguts aus. Die Anzahl der Module wurde hier lediglich aus Gründen der Übersichtlichkeit auf zwei beschränkt.

Jedes dieser Module 20 bzw. 30 besitzt analog zur Steuereinrichtung 10 einen Prozessor 21 bzw. 31, Halbleiterspeicher 22 bzw. 32 und Massenspeicher 23 bzw. 33. Die in den Speichern 22, 23, 32, 33 gespeicherten Daten dienen zum Betrieb des jeweiligen Moduls.

Generell sind die in den Speichern 12, 13, 22, 23, 32, 33 gespeicherten Daten unterschiedlich und hängen im allgemeinen vom Betriebszustand BZ der Verarbeitungsanlage und der Funktion der Komponente ab.

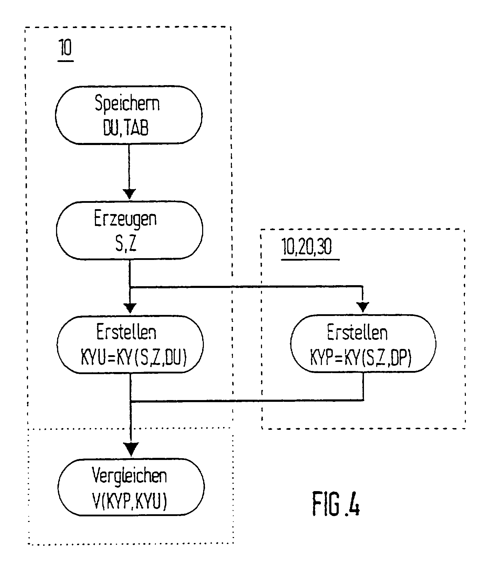

In einem in Fig. 4 gezeigten Flußdiagramm einer ersten Implementation der ersten Ausführungsform werden die Aufgaben der Prüfeinrichtung PE von der Steuereinrichtung 10 übernommen. Die unversehrten Daten DU, die den in den Speichern 12, 13, 22, 23, 32, 33 gespeicherten zu prüfenden Daten DP im unversehrten Zustand entsprechen, werden gemäß Fig. 3 im Massenspeicher 13 der Steuereinrichtung 10 in den entsprechenden Speicherbereichen D12, D13, D22, D23, D32 und D33 gespeichert. Zusätzlich wird eine entsprechende Tabelle TAB zur Prüfung mehrerer Komponenten der Verarbeitungsanlage auf dem Massenspeicher 13 gespeichert. Die zur Prüfung notwendigen Chiffrate KYU werden von der Steuereinrichtung 10 erstellt. Die entsprechenden Chiffrate KYP werden auf den zu prüfenden Komponenten erstellt. Die zu prüfenden Komponenten KP können hier beispielsweise die Module 20 oder 30 sein, aber auch die Steuereinrichtung 10 selbst.

Der Vergleich V der erstellten Chiffrate KYP und KYU wird dann entweder von der Steuereinrichtung 10 durchgeführt oder diese werden von der Steuereinrichtung 10 in lesbarer Form ausgegeben, so daß der Vergleich V von einem Bediener der Verarbeitungsanlage durchgeführt werden kann.

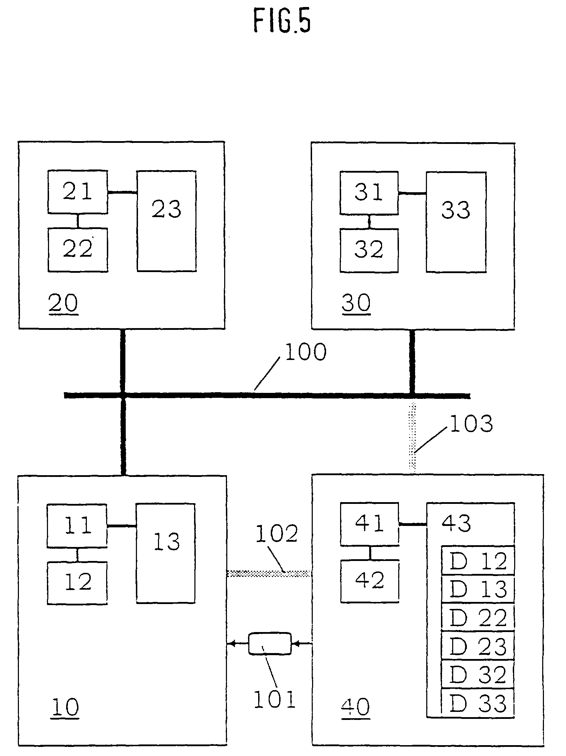

Fig. 5 zeigt eine Prinzipskizze einer Verarbeitungsanlage, bei der eine zusätzliche Hilfseinrichtung 40 vorgesehen wird. Die Hilfseinrichtung 40 kann beispielsweise ein Personal-Computer sein, der räumlich von der Verarbeitungsanlage getrennt sein kann. Auch die Hilfseinrichtung 40 besitzt einen Prozessor 41, Halbleiterspeicher 42 und Massenspeicher 43. Da im folgenden die Hilfseinrichtung 40 die Aufgaben der Prüfeinrichtung PE übernehmen soll, sind die zur Prüfung notwendigen unversehrten Daten DU bzw. die Tabelle TAB auf den Massenspeicher 43 der Hilfseinrichtung 40 gespeichert.

Der zur Durchführung der Prüfung notwendige Datenaustausch zwischen der Hilfseinrichtung 40 und der Verarbeitungsanlage kann auf unterschiedliche Art und Weise erfolgen. Eine Möglichkeit besteht darin, daß die Daten von der Hilfseinrichtung 40 auf einen tragbaren Datenträger 101 geschrieben werden, die dann in die Steuereinrichtung 10 eingegeben wird. Als tragbare Datenträger 101 können beispielweise Chipkarten oder Disketten eingesetzt werden.

Eine weitere Möglichkeit besteht darin, eine Datenleitung 102 vorzusehen, die einen Datenaustausch zwischen der Steuereinrichtung 10 und der Hilfseinrichtung 40 ermöglicht. Abhängig von den räumlichen Gegebenheiten kann diese Datenleitung 102 aus einer direkten Verbindung der beiden Komponenten oder aus einem Netzwerk bestehen.

Weiterhin ist es möglich, die Hilfseinrichtung 40 direkt an die interne Datenleitung 100 der Verarbeitungsanlage anzuschließen. In diesem Fall kann die Hilfseinrichtung 40 als Komponente der Verarbeitungsanlage angesehen werden.

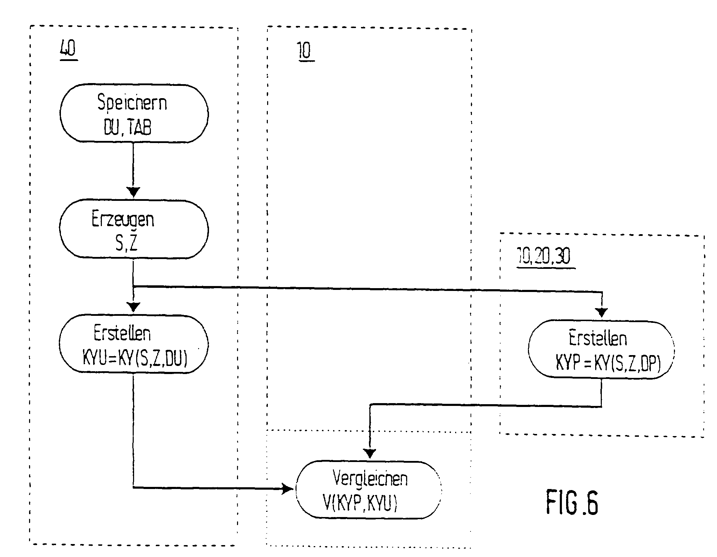

Fig. 6 zeigt ein Flußdiagramm einer zweiten Implementation der ersten Ausführungsform auf einer Verarbeitungsanlage mit einer Hilfseinrichtung 40. Wie schon oben ausgeführt, werden die unversehrten Daten DU bzw. die Tabelle TAB auf der Hilfseinrichtung 40 gespeichert. Weiterhin wird der Schlüssel S bzw. die Zufallszahl Z auf der Hilfseinrichtung 40 erzeugt. Zur Prüfung der Unversehrtheit von gespeicherten Daten auf der Verarbeitungsanlage werden der Schlüssel S bzw. die Zufallszahl Z über eine der oben beschriebenen Verbindungen 101, 102, 103 zur Steuereinrichtung 10 übertragen.

Zur Prüfung der Unversehrtheit der Daten muß nun die Steuereinrichtung 10 in den zur Überprüfung notwendigen Betriebszustand BZ versetzt werden. Dies kann entweder durch eine Information erfolgen, die direkt durch den Bediener in die Steuereinrichtung 10 eingegeben wird oder durch eine entsprechende Information, die von der Hilfseinrichtung 40 an die Steuereinrichtung 10 übertragen wird. Abhängig von dieser Information versetzt die Steuereinrichtung 10 die Verarbeitungsanlage in den gewünschten Betriebszustand BZ.

Die zur Prüfung notwendigen Informationen, welche Komponenten zu prüfen sind und in welchen Speicherbereichen SP die zu prüfenden Daten DP der jeweiligen Komponenten 10, 20, 30 gespeichert sind, können von der Hilfseinrichtung 40 abhängig vom gewünschten Betriebszustand BZ aus der Tabelle TAB gelesen und an die Steuereinrichtung 10 übertragen werden.

Eine andere Möglichkeit besteht darin, eine Kopie der Tabelle TAB auf der Steuereinrichtung 10 zu speichern. Die Steuereinrichtung 10 kann dann die notwendigen Informationen abhängig vom eingestellten Betriebszustand BZ direkt aus dem Duplikat der Tabelle TAB lesen.

Die Hilfseinrichtung 40 erstellt dann die notwendigen Chiffrate KYU, während die zum Vergleich notwendigen Chiffrate KYP auf den jeweiligen Komponenten 10, 20, 30 der Verarbeitungsanlage erstellt werden.

Zum Vergleich V der Chiffrate KYU und KYP können nun die Chiffrate KYU von der Hilfseinrichtung 40 zur Steuereinrichtung 10 übertragen und dort verglichen werden. Alternativ dazu ist es auch möglich, die Chiffrate KYU und die Chiffrate KYP von der Steuereinrichtung 10 in lesbarer Form ausgeben zu lassen. Der Vergleich der Chiffrate kann dann vom Bediener der Verarbeitungsanlage durchgeführt werden.

Wird als Übertragungsmedium zwischen Hilfseinrichtung 40 und der Steuereinrichtung 10 der tragbare Datenträger 101 gewählt, so kann aus ökonomischen Gründen der Schlüssel S bzw. die Zufallszahl Z sowie die erstellten Chiffrate KYU in einem Arbeitsschritt auf den tragbaren Datenträger 101 geschrieben und mit einem Mal zur Steuereinrichtung 10 übertragen werden.

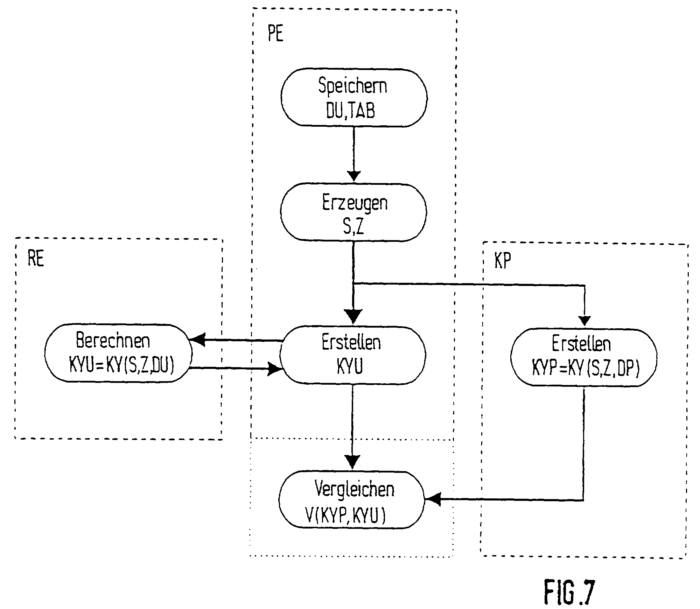

Die Fig. 7 zeigt ein Flußdiagramm einer weiteren Ausführungsform der Erfindung. Werden gespeicherte Daten von mehreren Komponenten der Verarbeitungsanlage geprüft, so müssen auf der Prüfeinrichtung PE mehrere Chiffrate KYU erstellt werden. Zur Entlastung der Prüfeinrichtung PE wird in dieser Ausführungsform die Berechnung der Chiffrate auf eine zusätzliche Recheneinrichtung RE verlagert. Hierzu werden die unversehrten Daten DU und der zur Berechnung der Chiffrate KYU notwendige Schlüssel S bzw. die Zufallszahl Z an die Recheneinrichtung RE übertragen. Diese erstellt dann die Chiffrate KYU aus den unversehrten Daten DU und überträgt die Chiffrate KYU wieder an die Prüfeinrichtung PE. Die anderen Verfahrensschritte werden analog zur Beschreibung der ersten Ausführungsform durchgeführt.

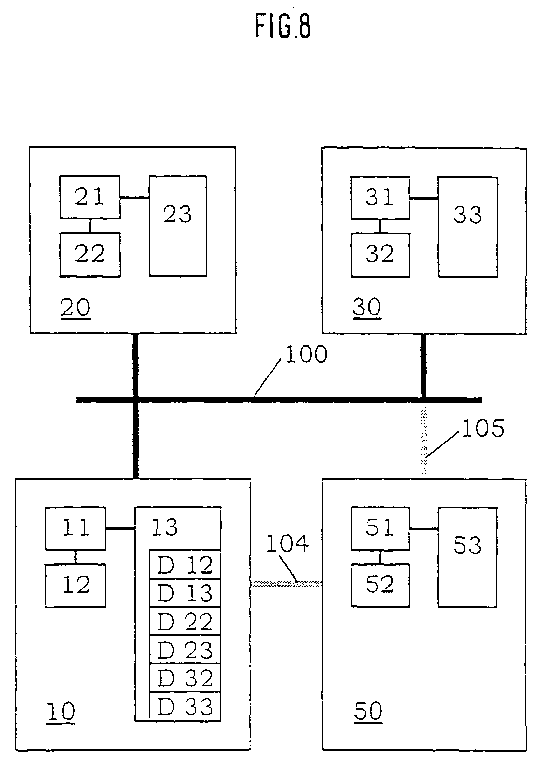

Fig. 8 zeigt eine erweiterte Verarbeitungsanlage, bei der zusätzlich eine Recheneinrichtung 50 vorgesehen ist. Auch diese weist einen Prozessor 51, Halbleiterspeicher 52 und Massenspeicher 53 auf. Die Recheneinrichtung 50 kann beispielsweise durch einen Personal-Computer realisiert werden. Die Recheneinrichtung 50 ist entweder über eine Datenleitung 104 analog zur Datenleitung 102 oder durch eine Datenleitung 105 analog zur Datenleitung 103 mit der Verarbeitungsanlage verbunden.

Eine Verbindung zwischen der Recheneinrichtung 50 und der Steuereinrichtung 10 über einen tragbaren Datenträger ist zwar prinzipiell möglich, bietet sich aber hier nicht an, da die unversehrten Daten DU vollständig von der Steuereinrichtung 10 an die Recheneinrichtung 50 übertragen werden müssen und es sich bei den unversehrten Daten DU um durchaus große Datenmengen handeln kann.

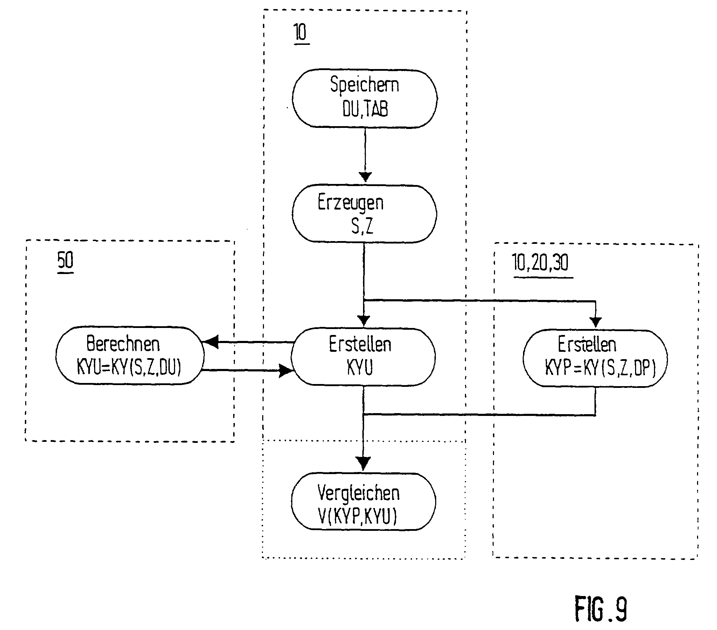

Die Fig. 9 zeigt ein Flußdiagramm einer Implementation der zweiten Ausführungsform auf einer Verarbeitungsanlage mit Recheneinrichtung 50. Das Flußdiagramm unterscheidet sich von dem der ersten Implementation der ersten Ausführungsform in Fig. 4 lediglich darin, daß die Berechnung der Chiffrate KYU auf der Recheneinrichtung 50 durchgeführt wird und diese anschließend zur Steuereinrichtung 10 übertragen werden. Der Vergleich V der Chiffrate KYP und KYU kann auch hier wiederum entweder direkt auf der Steuereinrichtung 10 oder nach Ausgabe der Chiffrate in lesbarer Form vom Bediener der Verarbeitungsanlage durchgeführt werden.

Generell ist es möglich, die Erfindung auch auf hier nicht explizit beschriebene Ausführungsformen zu übertragen. Weiterhin ist es möglich, daß die in den Ausführungsformen genannten Speicher der einzelnen Komponenen lediglich einfach ausgeführt sind oder bei Bedarf auch teilweise entfallen können.

## Patentansprüche

1. Verfahren zur Prüfung der Unversehrtheit von gespeicherten Daten in einer Verarbeitungsanlage für Blattgut, wie z.B. Banknoten oder Wertpapiere, durch eine Prüfeinrichtung, wobei die Verarbeitungsanlage mehrere Komponenten zur Bearbeitung des Blattguts aufweist,
dadurch **gekennzeichnet**, daß die folgenden Schritte durchgeführt werden:
- Speichern von unversehrten Daten (DU) in der Prüfeinrichtung (PE), wobei die unversehrten Daten (DU) den zu prüfenden Daten (DP) einer Komponente (KP) der Verarbeitungsanlage im unversehrten Zustand entsprechen;
- Erzeugen eines Schlüssels (S) durch die Prüfeinrichtung (PE), wobei der Schlüssel bei jeder Prüfung der Unversehrtheit von Daten verschieden ist;
- Erstellen eines ersten Chiffrats (KYP) durch die Komponente (KP), deren Daten geprüft werden sollen, wobei das erste Chiffrat (KYP) aus den zu prüfenden Daten (DP) der Komponente (KP) mittels eines kryptografischen Algorithmus (KY) und des Schlüssels (S) berechnet wird;
- Erstellen eines zweiten Chiffrats (KYU) durch die Prüfeinrichtung (PE), wobei das zweite Chiffrat (KYU) aus den unversehrten Daten (DU) mittels des kryptografischen Algorithmus (KY) und des Schlüssels (S) berechnet wird;
- Vergleich (V) der Chiffrate (KYU, KYP).

2. Verfahren nach Anspruch 1, dadurch gekennzeichnet, daß zur Prüfung von gespeicherten Daten mehrerer Komponenten (10, 20, 30) der Verarbeitungsanlage eine Tabelle (TAB) in der Prüfeinrichtung (PE) gespeichert ist, in der die folgenden Daten gespeichert sind:
- welche der Komponenten (10, 20, 30) zu prüfen sind,
- in welchen Speicherbereichen (SP) die zu prüfenden Daten (DP) der jeweiligen Komponenten (10, 20, 30) gespeichert sind und
- in welchen Speicherbereichen (SU) der Prüfeinrichtung (PE) die korrespondierenden unversehrten Daten (DU) gespeichert sind.

3. Verfahren nach Anspruch 2, dadurch **gekennzeichnet**, daß auf die Speicherbereiche (SP, SU) unter Verwendung direkter physikalischer Speicheradressen und/oder logischer Namen zugegriffen werden kann.

4. Verfahren nach Anspruch 2, dadurch **gekennzeichnet**, daß die Verarbeitungsanlage in verschiedenen Betriebszuständen betrieben werden kann und die Tabelle (TAB) zumindest teilweise von mindestens einem bestimmten Betriebszustand (BZ) abhängig ist.

5. Verfahren nach Anspruch 1, dadurch **gekennzeichnet**, daß die Verarbeitungsanlage in verschiedenen Betriebszuständen (BZ) betrieben werden kann und die zu prüfenden Daten (DP) einer Komponente (KP) der Verarbeitungsanlage zumindest teilweise von mindestens einem bestimmten Betriebszustand (BZ) abhängig ist.

6. Verfahren nach Anspruch 1, dadurch **gekennzeichnet**, daß die Daten (DU, DP) vor der Ausführung des kryptografischen Algorithmus (KY) durch Hinzufügen einer Zufallszahl (Z) dynamisiert werden.

7. Verfahren nach Anspruch 1, dadurch **gekennzeichnet**, daß der kryptografische Algorithmus (KY) die Daten (DU, DP) zunächst mittels eines Komprimierungsverfahrens (KV) komprimiert und dann die komprimierten Daten (KD) mittels eines Verschlüsselungsverfahrens (VV) unter Verwendung des Schlüssels (S) verschlüsselt.

8. Verfahren nach Anspruch 1 oder 6, dadurch **gekennzeichnet**, daß zur Erstellung des zweiten Chiffrats (KYU)
- die unversehrten Daten (DU) und der Schlüssel (S) bzw. die Zufallszahl (Z) von der Prüfeinrichtung (PE) über eine Datenleitung (104, 105) an eine Recheneinrichtung (RE) übertragen werden.
- die Recheneinrichtung (RE) das zweite Chiffrat (KYU) berechnet und
- die Recheneinrichtung (RE) das zweite Chiffrat (KYU) über die Datenleitung (104, 105) an die Prüfeinrichtung (PE) überträgt.

9. Verfahren nach Anspruch 8, dadurch **gekennzeichnet**, daß die Recheneinrichtung (RE) ein Komponente (50) der Verarbeitungsanlage ist.

10. Verfahren nach Anspruch 8, dadurch **gekennzeichnet**, daß die Recheneinrichtung (RE) eine externe Einrichtung ist.

11. Verfahren nach Anspruch 1, dadurch **gekennzeichnet**, daß die Prüfeinrichtung (PE) eine Komponente (10) der Verarbeitungsanlage ist.

12. Verfahren nach Anspruch 1, dadruch **gekennzeichnet**, daß die Prüfeinrichtung (PE) eine externe Einrichtung (40) ist.

13. Verfahren nach Anspruch 12, dadurch **gekennzeichnet**, daß zur Prüfung notwendige Daten zwischen der Verarbeitungsanlage und der externen Einrichtung (40) mittels eines tragbaren Datenträgers (101) übertragen werden.

14. Verfahren nach Anspruch 12, dadurch **gekennzeichnet**, daß zur Prüfung notwendige Daten zwischen der Verarbeitungsanlage und der externen Einrichtung (40) mittels einer Datenleitung (102, 103) übertragen werden.

15. Verfahren nach Anspruch 1, dadurch **gekennzeichnet**, daß der Vergleich (V) von der Prüfeinrichtung (PE) durchgeführt wird.

16. Verfahren nach Anspruch 1, dadurch **gekennzeichnet**, daß die Chiffrate (KYP, KYU) in lesbarer Form ausgegeben werden und der Vergleich (V) von einem Bediener (BD) der Verarbeitungsanlage durchgeführt wird.

## Claims

1. A method for testing the intactness of stored data in a processing facility for sheet material such as bank notes or papers of value by a test device, the processing facility having a plurality of components for processing the sheet material,
characterized in that the following steps are performed:
- storing intact data (DU) in the test device (PE), the intact data (DU) corresponding to the data (DP) to be tested from a component (KP) of the processing facility in the intact state;
- producing a key (S) by means of the test device (PE), the key being different at each test of data intactness;
- preparing a first cryptogram (KYP) by means of the component (KP) whose data are to be tested, the first cryptogram (KYP) being calculated from the data (DP) to be tested from the component (KP) by means of a cryptographic algorithm (KY) and the key (S);
- preparing a second cryptogram (KYU) by means of the test device (PE), the second cryptogram (KYU) being calculated from the intact data (DU) by means of the cryptographic algorithm (KY) and the key (S);
- making a comparison (V) of the cryptograms (KYU, KYP).

2. A method according to claim 1, characterized in that a table (TAB) is stored in the test device (PE) for testing stored data from a plurality of components (10, 20, 30) of the processing facility, the following data being stored in said table:
- which of the components (10, 20, 30) are to be tested,
- in which storage areas (SP) the data (DP) to be tested from the particular component (10, 20, 30) are stored, and
- in which storage areas (SU) of the test device (PE) the corresponding intact data (DU) are stored.

3. A method according to claim 2, characterized in that the storage areas (SP, SU) can be accessed using direct physical storage addresses and/or logical names.

4. A method according to claim 2, characterized in that the processing facility can be operated in different operating states and the table (TAB is dependent at least partly on at least one certain operating state (BZ).

5. A method according to claim 1, characterized in that the processing facility can be operated in different operating states (BZ) and the data (DP) to be tested from a component (KP) of the processing facility are dependent at least partly on at least one certain operating state (BZ).

6. A method according to claim 1, characterized in that the data (DU, DP) are dynamized by addition of a random number (Z) before execution of the cryptographic algorithm (KY).

7. A method according to claim 1, characterized in that the cryptographic algorithm (KY) first compresses the data (DU, DP) by a compression method (KV) and then encrypts the compressed data (KD) by an encryption method (W) using the key (S).

8. A method according to claim 1 or 6, characterized in that for preparing the second cryptogram (KYU)
- the intact data (DU) and the key (S) or the random number (Z) are transferred from the test device (PE) to a computing device (RE) via a data line (104, 105),
- the computing device (RE) calculates the second cryptogram (KYU), and
- the computing device (RE) transfers the second cryptogram (KYU) to the test device (PE) via the data line (104, 105).

9. A method according to claim 8, characterized in that the computing device (RE) is a component (50) of the processing facility.

10. A method according to claim 8, characterized in that the computing device (RE) is an external device.

11. A method according to claim 1, characterized in that the test device (PE) is a component (10) of the processing facility.

12. A method according to claim 1, characterized in that the test device (PE) is an external device (40).

13. A method according to claim 12, characterized in that data necessary for testing are transferred between the processing facility and the external device (40) by means of a portable data carrier (101).

14. A method according to claim 12, characterized in that data necessary for testing are transferred between the processing facility and the external device (40) by means of a data line (102, 103).

15. A method according to claim 1, characterized in that the comparison (V) is performed by the test device (PE).

16. A method according to claim 1, characterized in that the cryptograms (KYP, KYU) are outputted in readable form and the comparison (V) is performed by an operator (BD) of the processing facility.

## Revendications

1. Procédé de vérification de l'intégrité de données mémorisées dans une installation de traitement pour des produits en feuilles, tel que, par exemple, des billets de banque ou des papiers-valeur, au moyen d'un dispositif de contrôle, l'installation de traitement présentant plusieurs composants pour travailler le produit en feuilles,
caractérisé en ce que les étapes suivantes sont exécutées :
- mémorisation de données intactes (DU) dans le dispositif de contrôle (PE), les données intactes (DU) correspondant aux données (DP) à contrôler d'une composante (KP) de l'installation de traitement, à l'état intact ;
- génération d'une clé (S) par le dispositif de contrôle (PE), la clé étant différente à chaque contrôle de l'intégrité des données ;
- établissement d'un premier chiffre ou cryptogramme (KYP) par le composant (KP), dont les données doivent être contrôlées, le premier chiffre (KYP) étant calculé à partir des données à contrôler (DP) du composant (KP). au moyen d'un algorithme cryptographique (KY) et de la clé (S);
- établissement d'un deuxième chiffre (KYU) par l'unité de contrôle (PE), le deuxième chiffre (KYU) étant calculé à partir des données intactes (DU) au moyen de l'algorithme cryptographique (KY) et de la clé (S);
- comparaison (V) des chiffres (KYU, KYP).

2. Procédé selon la revendication 1, caractérisé en ce que, pour contrôler des données mémorisées de plusieurs composants (10, 20, 30) de l'installation de traitement, on mémorise dans le dispositif de contrôle (PE) un tableau (TAB) dans lequel les données suivantes sont stockées ;
- lesquels des composants (10, 20, 30) sont à contrôler.
- dans lesquelles des zones mémoire (SP) les données à contrôler (DP) des composants (10, 20, 30) respectifs sont mémorisées, et
- dans lesquelles des zones mémoire (SU) du dispositif de contrôle (PE) les données intactes (DU) correspondantes sont mémorisées.

3. Procédé selon la revendication 2, caractérisé en ce qu'on peut établir l'accès aux zones mémoire (SP, SU) en utilisant des adresses mémoire physiques directes et/ou des noms logiques.

4. Procédé selon la revendication 2, caractérisé en ce que l'installation de traitement peut fonctionner en différents états de fonctionnement et en ce que le tableau (TAB) dépend au moins partiellement d'au moins un état de fonctionnement (BZ) déterminé.

5. Procédé selon la revendication 1, caractérisé en ce que l'installation de traitement peut fonctionner en différents états de fonctionnement (BZ) et en ce que les données à contrôler (DP) d'un composant (KP) de l'installation de traitement dépend au moins partiellement d'au moins un état de fonctionnement (BZ) déterminé.

6. Procédé selon la revendication 1, caractérisé en ce que les données (DU, DP) sont dynamisées par insertion d'un nombre aléatoire (Z), avant d'utiliser l'algorithme cryptographique (KY).

7. Procédé selon la revendication 1. caractérisé en ce que l'algorithme cryptographique (KY) compresse les données (DU, DP) d'abord au moyen d'un procédé de compression (KV). et ensuite code les données compressées (KD) au moyen d'un procédé de codage (VV) en utilisant la clé (S).

8. Procédé selon la revendication 1 ou 6, caractérisé en ce que. pour l'établissement du deuxième chiffre (KYU).
- les données intactes (DU) et la clé (S) ou le nombre aléatoire (Z) sont transmis du dispositif de contrôle (PE) par une ligne de données (104, 105) à un dispositif de calcul (RE),
- le dispositif de calcul (RE) calcule le deuxième chiffre (KYU), et
- le dispositif de calcul (RE) transmet le deuxième chiffre (KYU) au dispositif de contrôle (PE), par l'intermédiaire de la ligne de données (104, 105).

9. Procédé selon la revendication 8, caractérisé en ce que le dispositif de calcul (RE) est un composant (50) de l'installation de traitement.

10. Procédé selon la revendication 8, caractérisé en ce que le dispositif de calcul (RE) est un dispositif externe.

11. Procédé selon la revendication 1, caractérisé en ce que le dispositif de contrôle (PE) est un composant (10) de l'installation de traitement.

12. Procédé selon la revendication 1, caractérisé en ce que le dispositif de contrôle (PE) est un dispositif externe (40).

13. Procédé selon la revendication 12, caractérisé en ce que les données nécessaires au contrôle sont transmises entre l'installation de traitement et le dispositif externe (40), au moyen d'un support de données (101) portatif.

14. Procédé selon la revendication 12, caractérisé en ce que les données nécessaires au contrôle sont transmises entre l'installation de traitement et le dispositif externe (40), au moyen d'une ligne de données (102, 103).

15. Procédé selon la revendication 1, caractérisé en ce que la comparaison (V) est effectuée par le dispositif de contrôle (PE).

16. Procédé selon la revendication 1, caractérisé en ce que les chiffres (KYP, KYU) sont fournis sous forme lisible et la comparaison (V) est effectuée par un opérateur (BD) de l'installation de traitement.
